# EUROPEAN PATENT APPLICATION

(11) **EP 4 764 677 A1**
(43) Date of publication of application: **24.06.2026**
(21) Application number: 24220692.8
(22) Date of filing: 17.12.2024
(51) Int. Cl.: G02F 1/035, G02B 6/136, G02B 6/12, G02F 1/225

(54) **METHOD OF FORMING A PHOTONIC DEVICE**

(71) Applicant: LiGenTec SA, 1024 Ecublens VD (CH)
(72) Inventor: Wuytens, Pieter, 1024 Ecublens (CH); Op de Beeck, Camiel, 1024 Ecublens (CH); Sacchetto, Davide, 1024 Ecublens (CH)
(74) Representative: Piotrowicz, Pawel Jan Andrzej

(57) **Abstract**

A method of forming a photonic device is described. The method comprises bonding an electro-optic structure onto a base wafer, wherein the electro-optic structure comprises a first insulator layer on a structure substrate and an electro-optic layer on the first insulator layer, and the base wafer comprises a base cladding layer on a base substrate, the electro-optic structure and the base wafer being bonded such that the electro-optic layer is between the first insulator layer and the base cladding layer.

## Description

### Technical Field

The present invention relates to a method of forming a photonic device, such as an electro-optic phase shifter or an electro-optic modulator comprising the electro-optic phase shifter.

### Background

There is a need to provide high-quality photonic devices, such as electro-optic modulators, which include electro-optic material on an insulator.

However, issues can arise during conventional manufacturing due to the processing limitations of the electro-optic material, for example due to its limited temperature budget.

### Summary

According to a first aspect of the present invention, there is provided a method of forming a photonic device. The method comprises bonding an electro-optic structure onto a base wafer, wherein the electro-optic structure comprises a first insulator layer on a structure substrate and an electro-optic layer on the first insulator layer, and the base wafer comprises a base cladding layer on a base substrate, the electro-optic structure and the base wafer being bonded such that the electro-optic layer is between the first insulator layer and the base cladding layer.

The electro-optic structure and the base wafer may be bonded such that the electro-optic layer directly contacts the base cladding layer.

The electro-optic structure and/or the base wafer may comprise one or more intermediate layers such that, once bonded, the intermediate layer(s) is between the electro-optic layer and the first insulator layer.

The electro-optic structure may further comprise an intermediate layer provided on the electro-optic layer, wherein the intermediate layer is a second insulator layer or an adhesive layer.

The electro-optic structure may further comprise a second insulator layer on the electro-optic layer and an adhesive layer on the second insulator layer.

The base wafer may further comprise at least one upper base cladding layer provided on the base cladding layer.

The base wafer may comprise a first upper base cladding layer on the base cladding layer and a second upper base cladding layer on the first upper base cladding layer.

The base wafer may comprise a third upper base cladding layer partially provided on the base cladding layer so as to define a cavity for bonding to the electro-optic structure.

The base wafer may comprise a plurality of cavities.

The base cladding layer may comprise at least one waveguide, and, once bonded, the electro-optic layer and the at least one waveguide in combination may provide a hybrid structure configured to support an optical mode.

The base cladding layer may comprise a first waveguide and a second waveguide.

The electro-optic structure and the base wafer may be bonded using wafer-to-wafer bonding, die-to-wafer bonding, or micro-transfer printing.

Wherein the adhesive layer is present in the electro-optic structure, micro-transfer printing may be used as the bonding technique.

Wherein the second upper base cladding layer is present in the base wafer, micro-transfer printing may be used as the bonding technique.

Wherein the second insulator layer is present without any adhesive layers such as the adhesive layer or the second upper base cladding layer, plasma-activated low-temperature wafer-to-wafer or die-to-wafer bonding may be used as the bonding technique.

The electro-optic layer may be formed of any one of the following materials: lithium niobate, LiNbOs, barium titanate, BaTiOs, lithium tantalate, LiTaOs, barium strontium titanate, BaₓSr₁₋ₓTiO₃, potassium niobate, KNbOs, lead zirconate titanate, PbZrₓTi₁₋ₓO₃, magnesium-doped lithium niobate, Mg:LiNbO₃, or poled thin-film lithium niobate, PPLN.

The first insulator layer may be formed of thermal silicon dioxide, SiOz, or alumina, Al₂O₃.

The second insulator layer and/or the first upper base cladding layer may be doped with rare-earth elements.

The second insulator layer and/or the first upper base cladding layer may be formed of alumina, Al₂O₃, and/or silicon dioxide, SiOz.

The adhesive layer may be any of PMMA, BCB or parylene, for example deposited via an evaporation or a chemical vapor deposition technique.

The method may further comprise removing the structure substrate.

The method may further comprise patterning the first insulator layer to form a plurality of electrode via holes, each electrode via hole exposing a region of the electro-optic layer, and providing at least one electrode layer in each electrode via hole to form electrode vias.

Providing at least one electrode layer may consist of providing a respective bottom electrode layer to completely fill each electrode via hole.

Providing at least one electrode layer may consist of providing a bottom electrode layer, followed by an electrode via layer.

A metal routing layer may be provided following the at least one electrode layer.

The method may further comprise providing a top cladding layer on the first insulator layer such that each electrode layer is encapsulated, patterning the top cladding layer to expose the electrode via holes, and providing a metal routing layer corresponding to the electrode vias, wherein the electrode routing layer and electrode vias in combination form electrodes.

A second top cladding layer may be provided following the metal routing layer.

According to a second aspect of the present invention, there is provided an electro-optic phase shifter formed according to the method of the first aspect of the present invention.

According to a third aspect of the present invention, there is provided an electro-optic modulator comprising at least two electro-optic phase shifters formed according to the method of the first aspect of the present invention.

Thus, a low loss electro-optic modulator may be achieved and optimised for an optical signal modulation scheme.

According to a fourth aspect of the present invention, there is provided a second harmonic generation device formed according to the method of the first aspect of the present invention.

In a preferred example, the electro-optic layer of the second harmonic generation device may be formed of poled thin-film lithium niobate, PPLN.

The base wafer may comprise the second insulator layer as its topmost layer, wherein the electro-optic structure does not comprise the second insulator layer.

The adhesive layer may be deposited on the base wafer prior to bonding the electro-optic structure.

### Brief Description of Drawings

Certain embodiments of the present invention will now be described, by way of example, with reference to the accompanying drawings in which:
Figure 1a schematically illustrates an electro-optic structure;
Figure 1b schematically illustrates an electro-optic structure;
Figure 1c schematically illustrates an electro-optic structure;
Figure 2a schematically illustrates a base wafer;
Figure 2b schematically illustrates a base wafer;
Figure 2c schematically illustrates a base wafer;
Figure 3 is a process flow diagram of a method of forming a photonic device;
Figure 4a schematically illustrates a step in a method of forming a photonic device;
Figure 4b schematically illustrates a step in a method of forming a photonic device;
Figure 4c schematically illustrates a step in a method of forming a photonic device;
Figure 5 schematically illustrates a photonic device;
Figure 6 is a process flow diagram of a method of forming a photonic device;
Figure 7a schematically illustrates a step in a method of forming a photonic device;
Figure 7b schematically illustrates a step in a method of forming a photonic device;
Figure 7c schematically illustrates a step in a method of forming a photonic device;
Figure 7d schematically illustrates a step in a method of forming a photonic device;
Figure 7e schematically illustrates a step in a method of forming a photonic device;
Figure 7f schematically illustrates a step in a method of forming a photonic device;
Figure 7g schematically illustrates a step in a method of forming a photonic device;
Figure 7h schematically illustrates a step in a method of forming a photonic device;
Figure 7i schematically illustrates a step in a method of forming a photonic device;
Figure 7j schematically illustrates a step in a method of forming a photonic device;
Figure 8 schematically illustrates an electro-optic modulator;
Figure 9a schematically illustrates an integrated phase shifter; and
Figure 9b schematically illustrates an integrated phase shifter.

### Detailed Description of Certain Embodiments

In the following, like parts are denoted by like references.

The present application is concerned with a method of forming a photonic device which comprises an electro-optic layer and at least one insulator layer (such as a dielectric layer).

Typically in the art, methods of depositing an insulator layer on an electro-optic material at low temperatures result in lower quality films, meaning that the insulator material may suffer from moisture uptake, defects, and absorption centres. Moisture uptake makes the resultant device more prone to instability over time (for example, refractive index drift), whereas defects and absorption centres induce higher losses for light propagating through the insulator layer. Therefore, a dielectric layer for an electro-optic modulator can cause poor device reliability and degraded opto-electrical performance. Therefore, there is a need to produce high quality dielectric layers for photonic devices such as electro-optical modulators.

One common approach in the art is to form dielectric layers by annealing the layers in an environment with suitable temperature and pressure conditions, such that the dielectric layers will modify their internal microstructure into a phase that contains a reduced amount of defects and absorption centres. For example, using deposition methods at high temperatures, or performing annealing steps at high temperatures, results in better properties of a dielectric layer for photonic devices. However, the typical annealing conditions that improve the quality of a dielectric layer might be detrimental for the electro-optical functionality of an electro-optical layer.

This is due to the limited temperature budget of many suitable electro-optic materials, such as lithium niobate, LiNbOs, barium titanate, BaTiOs, lithium tantalate, LiTaOs, barium strontium titanate, BaₓSr₁₋ₓTiO₃, potassium niobate, KNbOs, lead zirconate titanate, PbZrₓTi₁₋ₓO₃, magnesium-doped lithium niobate, Mg:LiNbO₃, or poled thin-film lithium niobate, PPLN, or, more generally, electro-optic materials having a suitable combination of electro-optic coefficients and refractive indexes to fabricate hybrid waveguides. For example, the maximum process temperature thin film lithium niobate wafers can withstand is around 500°C. Beyond this temperature, the lithium niobate film starts to crack and while at higher temperatures, the Curie temperature may be exceeded, thereby causing the electro-optic material to lose its ferroelectric properties.

The method according to the present application utilises an electro-optic structure which is separately formed prior to the formation of the photonic device.

The electro-optic structure comprises the electro-optic layer and at least one insulator layer. The electro-optic layer is formed on an insulator layer during fabrication of the electro-optic structure. This electro-optic structure is then used in the method according to the present application to form a photonic device. Thus, the insulator layer is already provided on the electro-optic material before forming the photonic device.

Thus, the method according to the present application addresses the problem of how to integrate high quality insulator layers (such as dielectric thin films) with high quality electro-optical layers that have competing thermal or temperature annealing requirements.

As will be hereinafter explained, the method involves bonding the electro-optic structure into a base wafer. The base wafer comprises at least one cladding layer and may include one or more optically functional layers (for example, specific waveguide configurations) embedded within it, which depend on the intended function of the photonic device being formed.

As used herein, the term "electro-optic structure" refers to any substrate which carries an electro-optic material layer and at least one insulator layer (such as a dielectric thin film). The electro-optic structure may be a wafer, a die(s), or a coupon, but is not restricted to these forms.

As used herein, the term "insulator layer" refers to any layer formed of insulating material, and is not restricted to a particular insulating material nor a particular method of formation (such as growth, deposition, either annealed or not). The insulator layer may herein be referred to as an "insulating layer". Examples of the insulator layer include a dielectric layer or a dielectric thin film layer.

As will be described in more detail hereinafter, the insulator layer may be formed of an oxide, such as silicon oxide or silicon dioxide. The insulator layer may be formed of any suitable insulating material which may be selected according to the intended function of the photonic device being formed.

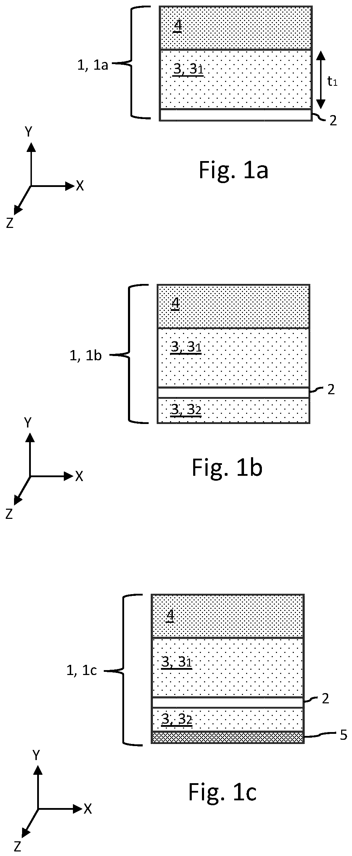

Referring now to Figures 1a to 1c, several example electro-optic structures will now be described, which may be used in the method of forming a photonic device according to the present application.

Referring to Figure 1a, a first electro-optic structure ("EO structure") 1, 1a is shown in a cross-sectional view in the x-y plane. The thickness direction of the constituent layers of the first EO structure 1a are in the y direction.

The first EO structure 1a comprises a layer 2 of electro-optic material provided on a first insulator layer 3, 3₁. The first insulator layer 3₁ is provided on a substrate 4 (herein "structure substrate") of the first EO structure 1.

The structure substrate 4 can be a wafer, a die, or a coupon respectively suitable for wafer-to-wafer, die-to-wafer bonding and/or micro-transfer printing techniques.

In other examples, the EO structure 1 may include layers additional to those present in the first EO structure 1a; some of these examples will now be described.

Referring to Figure 1b, a second EO structure 1, 1b is similarly shown.

The second EO structure 1b is the same as the first EO structure 1a, but further includes a second insulator layer 3, 3₂. The second insulator layer 3₂ is provided on an opposite side of the electro-optic layer 2 to the first insulator layer 3₁.

The second insulator layer 3z may function as an intermediate layer for the bonding of the second EO structure 1b to the base wafer (not shown), for example in wafer-to-wafer bonding or die-to-wafer plasma activated bonding.

Referring now to Figure 1c, a third EO structure 1, 1c is similarly shown.

The third EO structure 1c is the same as the second EP structure 1b, but further includes an adhesive layer 5 provided on the second insulator layer 3z, opposite to the electro-optic layer 2.

As with the second insulator layer 3z, the adhesive layer 5 may function as an intermediate layer for the bonding of the third EO structure 1c to the base wafer (not shown), for example in for instance adhesive bonding or micro-transfer printing.

In other examples, the EO structure 1 may comprise the adhesive layer 5 but not the second insulator layer 3₂. In such examples, the adhesive layer 5 is the only intermediate layer for the bonding. In other examples, other intermediate layer may be used according to the requirements of the selected bonding method.

The layer materials and thicknesses used in the different example EO structures 1 may depend on the intended function of the photonic device being formed.

The electro-optic layer 2 may be formed of lithium niobate, LiNbOs, preferably thin film lithium niobate (herein "TFLN"). Other suitable materials for the electro-optic layer 2 include barium titanate, BaTiOs, lithium tantalate, LiTaOs, barium strontium titanate, BaₓSr₁₋ₓTiO₃, potassium niobate, KNbOs, lead zirconate titanate, PbZrₓTi₁₋ₓO₃, magnesium-doped lithium niobate, Mg:LiNbO₃, or poled thin-film lithium niobate, PPLN, or, more generally, electro-optic materials having a suitable combination of electro-optic coefficients and refractive indexes to fabricate hybrid waveguides.

The first insulator layer 3₁ may be formed of thermal silicon dioxide, SiOz. The thermal silicon dioxide layer may have a thickness, t₁, (Figure 1a) from 100 nm to 9,000 nm, for example from 100 nm to 3,000 nm.

The second insulator layer 3₂ may be formed of the same material as the first insulator layer 3₁.

In other examples, the first and/or second insulator layer(s) 3, 3₁, 3₂ may be formed of alumina, Al₂O₃, silicon dioxide, SiOz, or different allotropes or material microstructures optimal to minimize optical losses in a given wavelength range. For instance, fused-silica, SiOz, or alumina, Al₂O₃, may be used for optimal optical transmission in the UV < 350 nm wavelength range, while quartz, SiO₂, may be used for better optical transparency at telecom bands, near 1550 nm wavelength.

In some cases, the first and/or second insulator layer(s) 3, 3₁, 3₂ may be doped to produce light amplification. For instance, a rare-earth element such as Erbium, Er Ytterbium, Tb or Thulium, Tm may be implanted onto the insulator layer(s) 3. A suitable combination of rare-earth elements might be chosen depending on which wavelength may be pumped and amplified.

The adhesive layer 5 may be formed of poly(methyl methacrylate), PMMA, benzocyclobutene, BCB, or parylene. The adhesive layer 5 may be deposited via an evaporation or a chemical vapor deposition technique.

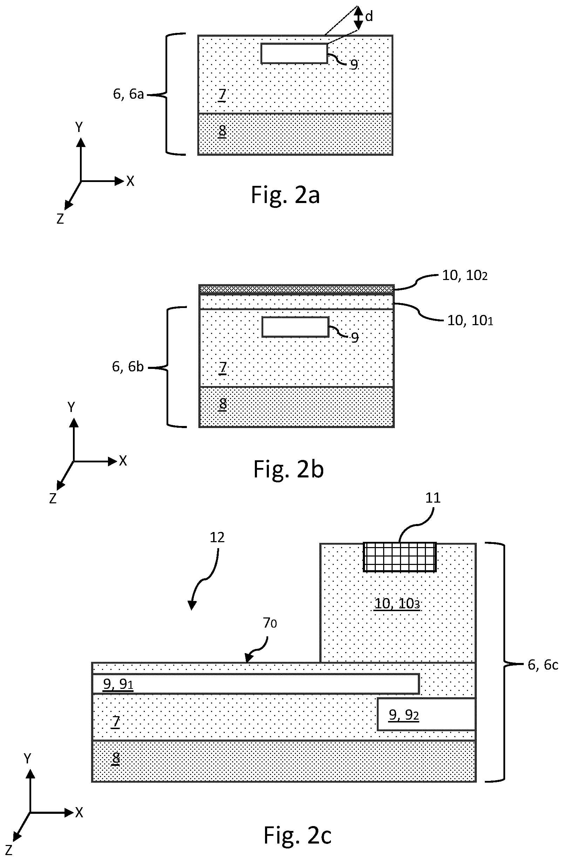

Referring now to Figures 2a to 2c, several example base wafers will now be described, which may be used in the method of forming a photonic device according to the present application.

Referring to Figure 2a, a first base wafer 6, 6a is shown in a cross-sectional view in the x-y plane. The thickness direction of the constituent layers of the first base wafer 6a are in the y direction.

The first base wafer 6a comprises a cladding layer 7 (herein "base cladding layer") on a substrate 8 (herein "base substrate"). The base cladding layer 7 may include one or more optically functional layers (for example, specific waveguide configurations) embedded within it, which depend on the intended function of the photonic device being formed. In the example shown in Figure 2a, a waveguide 9 is embedded in the base cladding layer 7.

The waveguide 9 may be embedded at a distance, d, between 1 nm and 3,000 nm from the base cladding layer 7 top surface. In other examples, the waveguide 9 may be at the same level (d = 0 nm) of the base cladding layer 7 top surface.

In some cases, the waveguide 9 may protrude or extend from the top surface of the base cladding layer 7. In which case, d would be negative. For example, *d* may be between -1 nm and the entire waveguide 9 thickness, for example -1,000nm.

Referring to Figure 2b, a second base wafer 6, 6b is similarly shown.

The second base wafer 6b is the same as the first base wafer 6a, but further includes a first upper base cladding layer 10, 10₁ and/or a second upper base cladding layer 10, 10z. If both upper base cladding layers 10 are present, the first upper base cladding layer 10₁ is provided on the base cladding layer 7 and the second upper base cladding layer 10z is provided on the first upper base cladding layer 10₁. In examples where only one of the upper base cladding layers 10, that layer 10 is provide on the base cladding layer 7.

The first upper base cladding layer 10₁ and/or the second upper base cladding layer 10z function as an intermediate layer for the bonding of one of the EO structures 1 to the second base wafer 6b.

Referring to Figure 2c, a third base wafer 6, 6b is similarly shown.

The third base wafer 6c is the same as the first base wafer 6a, but further includes a third upper base cladding layer 10, 10₃ (instead of the first upper base cladding layer 10₁ and second upper base cladding layer 10z). The third upper base cladding layer 10₃ may comprise one or more electrically functional layers (for example, specific metal routing configurations) embedded within it, which depend on the intended function of the photonic device being formed. In the example shown in Figure 2c, a metal routing layer 11 is embedded in the third upper base cladding layer 10s.

The third upper base cladding layer 10₃ may be patterned to allow access to/expose the top surface of base cladding layer 7. In Figure 2c, a section of the top surface (labelled 7₀) is exposed for bonding to the EO structure 1; this will be described in more detail hereinafter.

As with other example base wafers 6, the base cladding layer 7 of the third base wafer 6c may include one or more optically functional layers (for example, specific waveguide configurations) embedded within it, which depends on the intended optical function of the photonic device being formed. In the example shown in Figure 2c, the waveguide 9, 9₁ (herein "first waveguide") is embedded in the base cladding layer 7, as well as a second waveguide 9₂ below. In such examples, the third base wafer 6c may include a photonic architecture which is optimized for integrated photonic circuits and may be interconnected to both passive optical components and active optical photonics via the first and second waveguides 9₁, 9₂ and via the metal routing layer 11. In such a case, a cavity 12 may be formed (as shown in Figure 2c) to allow access to the first waveguide 9₁, as well as to bond the EO structure 1 to the top surface 7₀ of the base cladding layer 7.

The layer materials and thickness used in the different example base wafers may depend on the intended function of the photonic device being formed.

The base cladding layer 7 may be formed of the same material as the first insulator layer 3₁. Likewise, the first upper base cladding layer 10₁ may be formed of the same material as the first insulator layer 3₁. Preferably, first upper base cladding layer 10₁ is a thermal silicon oxide layer, SiOz, for example produced by either thermal oxidation of silicon or by annealing of a chemical vapour deposition oxide. Typically, first upper base cladding layer 10₁ is formed of the same material as the base cladding layer 7. Whereas, the second upper base cladding layer 10z may be formed of the same material as the adhesive layer 5 using the same deposition techniques.

The third upper base cladding layer 10₃ may be formed of the same material as the first insulator layer 3₁. In some examples, the thickness of the first insulator layer 3₁ might be adjusted to closely match the thickness of third upper base cladding layer 10s. This topography may allow for optimal interconnection of electrodes (hereinafter described) between the metal routing of the third base wafer 6c and the interconnection scheme of the electro-optic layer 2.

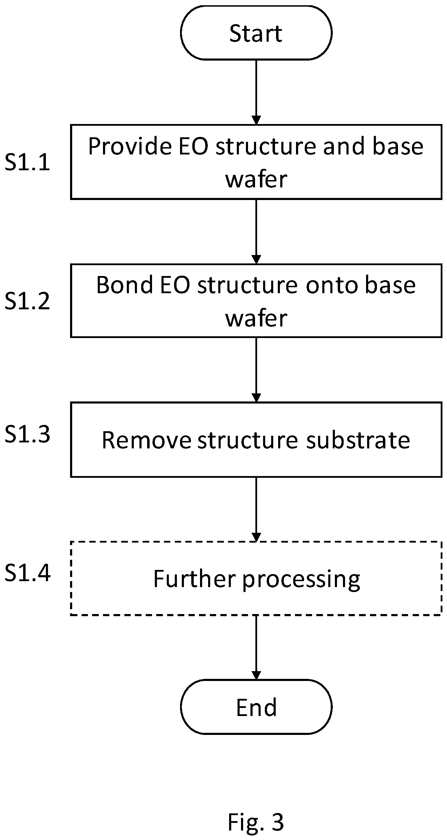

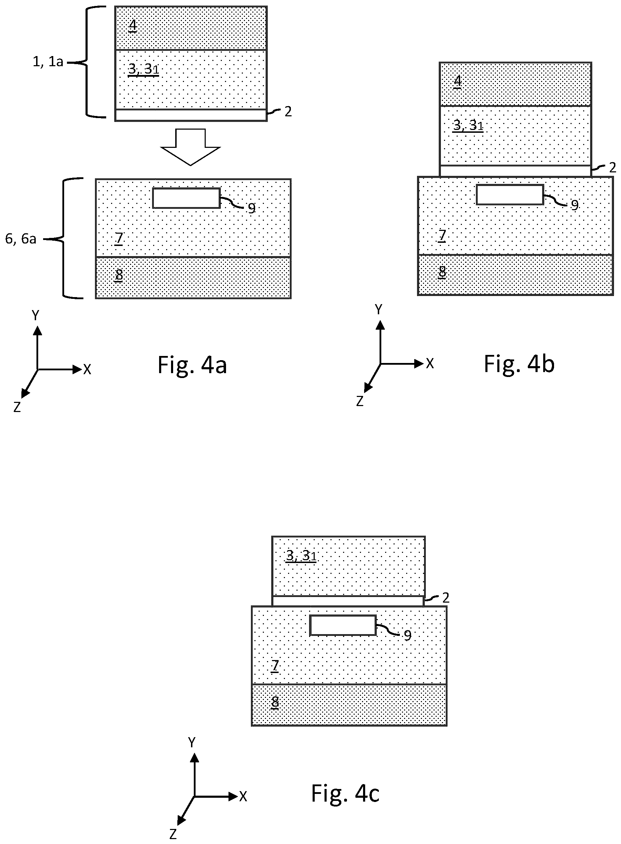

With reference to Figure 3 and Figures 4a to 4c, an example of the method of forming a photonic device will now be described.

First, an EO structure 1 and a base wafer 6, 6a are separately provided (step S1.1), as shown in Figure 4a. Both the EO structure 1 and the base wafer 6 are formed prior to the method of forming the photonic device.

Merely for the sake of illustration, the method steps shown in Figures 4a to 4c employ the first EO structure 1a and the first base wafer 6a, although any suitable example EO structure 1 and base wafer 6 may be used.

Next, the EO structure 1 is bonded onto the base wafer 6 (Step S1.2).

In the example shown in Figure 4b, the electro-optic layer 2 bonds to the base cladding layer 7 directly (in other words, without intermediate layers).

However, in alternative examples of the method, a thin intermediate layer(s) (to provide stronger adhesion) may be present between the electro-optic layer 2 and the base cladding layer 7 - for example, when the second or third EO structures 1b, 2c or the second or third base wafers 6b, 6c are used.

For example, when the second EO structure 1b or the third EO structure 1c is employed, the second insulator layer 3₂, or the adhesive layer 5, or both (as a stack), function as intermediate layers. In addition, or alternatively, intermediate layers may be present in the base wafer 6 prior to bonding (for example, when the second or third base wafer 6b, 6c is used); in which case, the intermediate layers may be the first and second upper base cladding layers 10₁, 10z.

A suitable combination of intermediate layers might be chosen according to the specificities of the chosen bonding technique. Plasma-activated low-temperature wafer-to-wafer or die-to-wafer bonding may be used when adhesive layers (such as the adhesive layer 5 and the second upper base cladding layer 10z) are not part of the intermediate bonding layers. When adhesive layers are present, suitable wafer-to-wafer or die-to-wafer bonding may be selected. The use of adhesive layers may also be utilised for micro-transfer printing techniques.

The intermediate layers, the second insulator layer 3₂ and the first upper base cladding layer 10₁, may be of a similar composition to the first insulator layer 3₁, for example formed of thermal silicon dioxide, SiOz, or a silicon dioxide deposited by a chemical vapour deposition, CVD, technique. Preferably, the intermediate layer, the second insulator layer 3₂, is a deposited SiOz with low thickness value, for example less than 200 nm and typically around or below 50 nm.

In some examples, the electro-optic structure 1 is a coupon for micro-transfer printing, in which case the second insulator layer 3₂ may be omitted.

Irrespective of the presence and composition of the intermediate layers, a variety of bonding techniques for step S1.2 are suitable. For example, the EO structure 1 may be bonded to the base wafer 6 using micro-transfer printing. As hereinbefore outlined, in examples in which the EO structure 1 is a wafer, the EO structure 1 may be bonded to the base wafer 6 via wafer-to-wafer bonding. In examples in which the EO structure 1 is a die, the EO structure 1 may be bonded to the base wafer 6 via die-to-wafer bonding. In other examples, the EO structure 1 may be sputtered onto the base wafer 6.

As illustrated with the completion of step S1.2, the first insulator layer 3₁ of the EO structure 1 can be used as the top cladding of the photonic device being formed. Herein, the "bottom" of the device being formed is defined as the exposed side of the base substrate 8. Thus, on completion of step S1.2, the structure substrate 4 is at the "top" of the device being formed. In this way, the method according to the present application avoids the first insulator layer 3₁ being formed on the electro-optic layer 2.

Next, the structure substrate 4 is removed (step S1.3) to expose the first insulator layer 3₁, as shown in Figure 4c. The structure substrate 4 may function as a handle layer. The removal of the structure substrate 4 may be done using mechanical removal (grinding), wet chemical removal, plasma etching, or a combination thereof. The first insulator layer 3z, and other layers, may now be subject to further processing (step S1.4) according to the type of photonic device being formed.

As hereinbefore explained, there is a need for integrating high quality dielectric thin films with high quality electro-optical layers that have competing thermal or temperature annealing requirements - for example to provide high quality hybrid modulators.

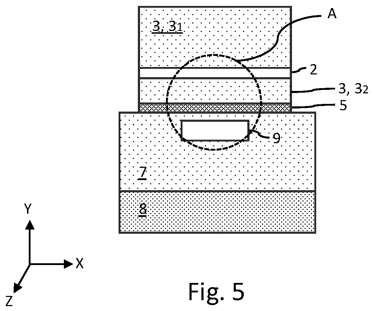

Referring now to Figure 5, a photonic device is shown which has been formed according to the method hereinbefore described. The photonic device comprises the third EO structure 1c bonded to the first base wafer 6a.

In the present example, the first waveguide 9₁ is formed of silicon nitride and the electro-optical layer 2 is a lithium niobate thin-film, LNOI. The optical mode A (the extent of which is shown by the dashed circle in Figure 5) is guided by the hybrid configuration formed by the SiN waveguide 9₁ and the LNOI film 2.

The LNOI film 2 is formed on the first insulator layer 3₁ prior to the formation of the photonic device, in which the LNOI film 2 is simply indirectly bonded to the base wafer 6a containing the SiN waveguide 9₁. This avoids the processing issues which can arise due to the limited temperature budget of lithium niobate. Thus, a high-quality hybrid modulator can be formed using the method according to present application.

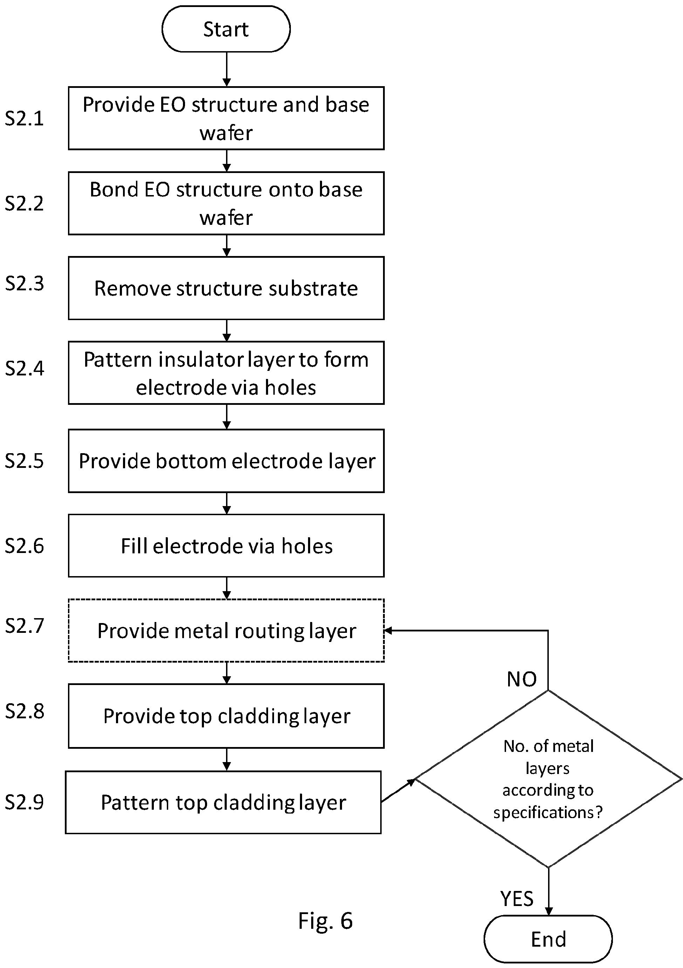

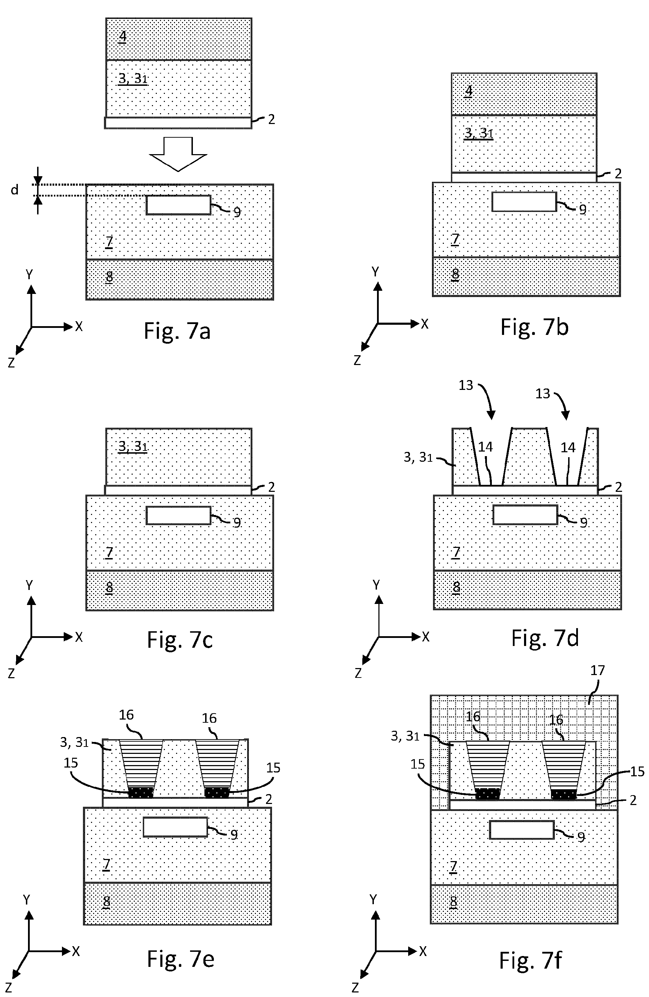

In a preferred example, the photonic device to be formed is an electro-optic modulator. Referring now to Figure 6 and Figures 7a to 7j, an example of the method according to the present application will now be described - in which the photonic device being formed is an electro-optic phase shifter for integration into an electro-optic modulator.

The initial method steps S2.1, S2.2, and S2.3 are the same as steps S1.1, S1.2, and S1.3 hereinbefore described. As shown from Figures 7a to 7c, the EO structure 1a is bonded onto the base wafer 6a and the structure substrate 4 is removed.

Merely for the sake of illustration, the method steps shown in Figures 7a to 7j employ the first EO structure 1a and the first base wafer 6a, although other suitable example EO structures 1 and base wafers 6 may be used. In the present example, the first base wafer 6a includes a single waveguide 9₁ as an example of a waveguide configuration which may be present in the base cladding layer 7.

Next, the first insulator layer 3₁ is patterned to form a pair of holes 13 (herein also referred to as "electrode via holes") (step S2.4). The holes 13 in the first insulator layer 3₁ each expose a region 14 of the electro-optic layer 2. This is shown in Figure 7d.

Typically, the first insulator layer 3₁ is etched using a combination of dry and wet chemical etching.

As will be hereinafter explained, the electrode via holes 13 are for the provision of electrodes. The electrodes are formed following several processing steps, which will now be described.

After the electrode via holes 13 are formed, an electrode layer 15 (herein also "bottom electrode layer") is applied or provided to each hole 13 (step S2.5).

The bottom electrode layer 15 is provided in the electrode via hole 13 so as to directly contact the exposed region 14 of the electro-optic layer 2. The bottom electrode layer 15 may simply form a coating over the exposed region 14 (as shown in Figure 7e). The bottom electrode layers 15 are also applied to the top surface of the first insulator layer 3₁. The bottom electrode layers 15 are applied so as to create a specific electrical contact scheme according to a desired shape of the electrodes.

The bottom electrode layers 15 may be provided using a variety of techniques or a combination thereof. The technique(s) selected may depend on the material used.

The bottom electrode layers 15 may be formed of aluminium, Al, titanium nitride, TiN, tungsten nitride, WN, tantalum nitride, TaN, or more chemically inert materials, such as gold, Au, or silver, Ag. In some examples, the lift-off method may be used to form the bottom electrode layers 15. In other examples, the bottom electrode layers 15 are formed by deposition and plasma etching.

Next, each electrode via hole 13 is completely filled (step S2.6).

In some examples, each bottom electrode layer 15 may fill the whole space defined by its respective electrode via hole 13 to form electrode vias that enable to bring electrical signal from the bottom electrode layer 15 to a different height along the y-direction, most typically at about the same Y-coordinate as the upper portion of the first insulator layer 3₁ (see Figure 7e).

In other examples, an electrode via layer 16 is applied or provided to each hole 13 (step S2.6) after the bottom electrode layer 15 to fill the remainder of each hole 13. This is shown in Figure 7e.

The electrode via layers 16 may be provided using a variety of techniques or a combination thereof. The technique(s) selected may depend on the material used.

The electrode via layers 16 may be formed of tungsten, W, or of copper, Cu. In some examples, a titanium nitride, TiN, tantalum nitride, TaN, or TaWN seed layer may be deposited by sputtering on top of the bottom electrode layers 15. This is followed by chemical vapour deposition of tungsten, such that the electrode via holes 13 are filled or mostly filled (Figure 7e) - even when the holes 13 have a high aspect ratio (for instance when the height of the electrode via holes 13 are greater than their width in either the x or the z-direction).

In other examples, the electrode via layers 16 may be formed of copper, Cu, by firstly depositing a tantalum nitride, TaN, seed layer, followed by a Cu electroplating process, thereby filling the via holes 13 to form the electrode vias. Further processing such as W or Cu chemical mechanical processing or selective wet/dry etching may be carried out to produce the desired electrode structure (for example, the geometry in the x-y plan shown in Figure 7e).

In some examples, step S2.6 may also involve forming a metal routing layer (not shown) which might be used to interconnect a plurality of the electrodes via holes 13.

In other examples, the metal routing layer may be formed in a separate, subsequent step (step S2.7). This step may be performed when each bottom electrode layer 15 fills the whole space defined by its respective electrode via hole 13.

This metal routing layer might be formed to interconnect the bottom electrode layers 15 with external drivers to operate an electro optic modulator. The external drivers might be formed on the base wafer 6a and located in a different region than where the electro-optical modulator is formed. Optionally, the external drivers may be on a separate base wafer (not shown), and the function of the metal routing layer is to electrically interconnect the bottom electrode layers 15 to bonding pads (not shown) for flip-chip assembly and/or for wire-bonded external circuitry.

This metal routing layer might alternatively be called a redistribution layer or RDL.

Next, a cladding layer 17 (herein "top cladding layer") is provided on the first insulator layer 3₁ (step S2.8) such that the electrode via layers 16 (or the bottom electrode layers 15, if the electrode via layers 16 are not present) are encapsulated (Figure 7f).

All exposed surfaces of the first insulator layer 3₁, the bottom electrode layers 15, the electrode via layers 16, and the electro-optic layer 2 may be encapsulated by the top cladding layer 17, as shown in Figure 7f. The methods for forming the top cladding layer 17 are restricted by the temperature budget imposed by the electro-optic layer 2.

Preferably, the top cladding layer 17 is formed of silicon dioxide, SiOz. In other examples, other cladding materials such as sapphire, Al₂O₃, or polymers such as Benzocyclobutene, BCB, or polyamide, PI, may be used. Other cladding materials may be used provided that they do not inhibit further processing of the wafer. In examples where the top cladding layer 17 is formed of a dielectric material, low-temperature deposition methods such as plasma-enhanced chemical vapour deposition (PECVD), physical vapour deposition (PVD) or sputtering may be used. In examples where the top cladding layer 17 is formed of a polymer, methods such as spin-coating, spray coating or sol-gel deposition may be used.

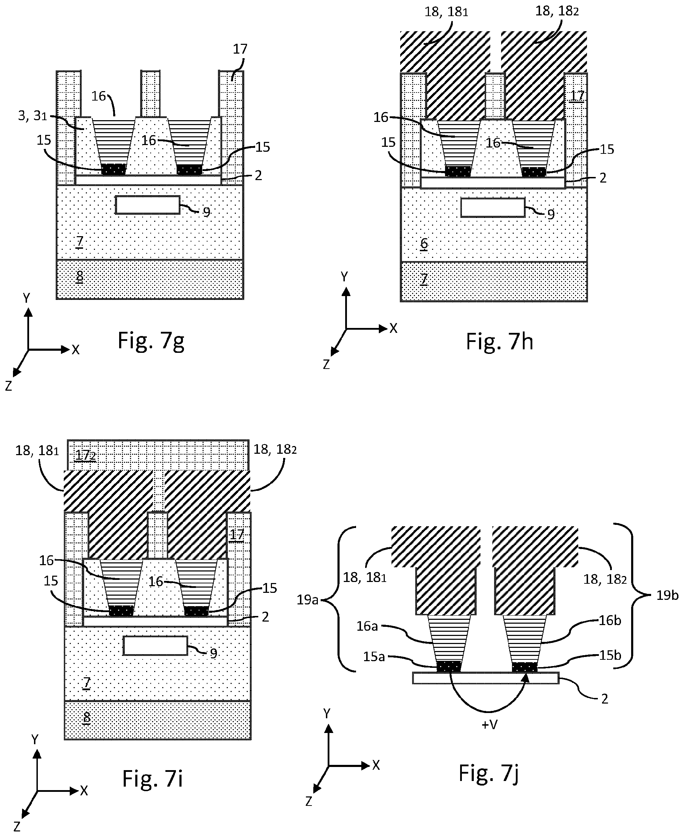

Next, the top cladding layer 17 is patterned to expose the top surface of the electrode via holes 13 (step S2.9). This is show in Figure 7g.

According to the technical specifications of the photonic device being formed, additional metal routing layers may be formed following step S2.9. These additional metal routing layers are patterned (Figure 7h) according to the electrical interconnection purposes of the device. For example, an additional metal routing layer may be formed so as to produce an electro-optic phase shifter - as will now be explained.

Referring to Figure 7h to 7j, a first metal pattern 18₁ may be used to interconnect a first electrode to an electrical signal generator (not shown), while a second metal pattern 18₂ may interconnect to the ground electrical reference of the electrical signal generator. The first and second metal patterns 18₁, 18₂ are an example of an additional metal routing layer.

The first and second metal patterns 18₁, 18₂ may be further cladded (for example, for reliability purposes) using a second top cladding layer 17, 17₂ (Figure 7i), for example to avoid corrosion and moisture uptake.

The first and second metal patterns 18₁, 18₂ in combination with the electrode via layers 16 (separate layers for each hole 13 labelled 16a, 16b in Figure 7j) and the bottom electrode layers 15 (separate layers for each hole 13 labelled 15a, 15b in Figure 7j) form two distinct modulator electrodes 19a and 19b. The modulator electrodes 19a and 19b can be biased at distinct electrical voltage values, thereby producing a voltage drop V over the electro-optical layer 2 (see Figure 7j). For example, electrode modulator 19b might be set at a positive voltage +V with respect to a reference voltage applied to electrode modulator 19a; this causes the refractive index of the electro-optic layer 2 to change in response to the voltage drop according to an electro-optic coefficient of the electro-optic layer 2.

As the first and second metal patterns 18₁, 18₂ provide electrical interconnectivity for an external electrical signal, and the patterned waveguide 9 provides optical interconnectivity for an external optical signal, the configuration of Figure 7g to 7j forms an electro-optic phase shifter (Figure 7i).

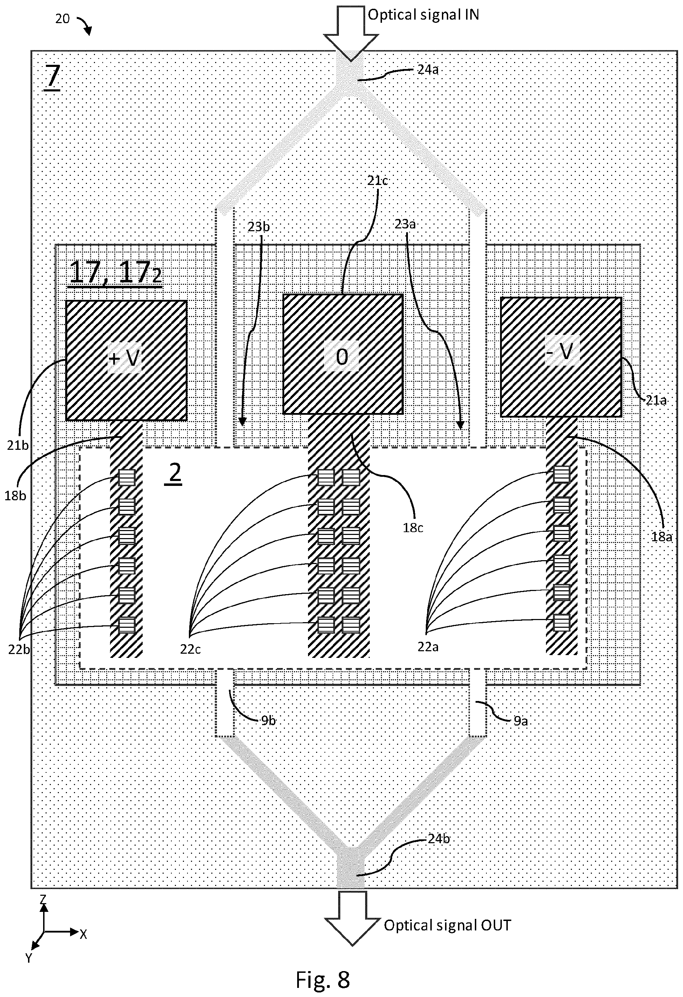

Referring now to Figure 8, electro-optic phase shifters formed by the method according to the present application may be integrated into an electro-optic modulator 20. The electro-optic modulator shown in Figure 8 is in aerial view along the x-z plane

In the electro-optic modulator 20, the metal patterns 18 are interconnected to respective electrical pads 21 to provide electrical wire bonding and to carry an electrical signal to the electro-optic layer 2. In the specific example shown in Figure 8, three metal patterns 18a, 18b, 18c are provided, each addressing a respective electrical pad 21a, 21b, 21c being applied with a different voltage bias. For this purpose, each metal pattern 18a, 18b, 18c provides electrical interconnection to an array of electrodes vias 22a, 22b, 22c (formed by the bottom electrode layers 15 and electrode via layers 16 hereinbefore described).

A different electro-optic modulator may be formed using the electro-optic phase shifters according to the present application. In the example shown in Figure 8, a Mach-Zehnder modulator 20 is shown in which two electro-optic phase shifters 23a, 23b according to the present application interconnect optical signals to beam splitters 24a and 24b, via respective waveguides 9a, 9b.

In this case, the electro-optic modulator 20 may be operated by applying a suitable electrical signal to minimise losses. For instance, phase shifter 23a can be operated by applying a negative voltage -V on electrode pad 21a with respect to a reference 0V on electrode pad 21c, while phase shifter 23b can be simultaneously operated by applying a positive voltage +V on electrode pad 21b. The electrical signal may be an AC signal such that the voltage applied to the metal pattern 18a is rotated 180° with respect to the voltage applied to the metal pattern 18b.

In other examples, the configuration of the arrays of electrode vias 22a, 22b, 22c may be adjusted according to the electrical signal being applied. For example, in an example in which a high frequency RF electrical signal > 10 GHz is applied, wherein the period of the RF electrical signal becomes comparable to the length of the modulator 20, an electrode via design specific for minimizing electro-optical losses (e.g. traveling-wave electrodes) may be required. In such a case, the via arrays 22a, 22b, 22c may be merged into a single larger via, mostly reproducing the geometry of the corresponding metal patterns 18a, 18b, 18c.

Thus, the sequence of steps S2.7, S2.8, S2.9 may be iterated to provide a suitable number of patterned metal layers for high performance electrical interconnections. For instance, two or more metal layers may be required to reduce electrical parasitic capacitances and resistances for high-frequency electrical RF signals operating at 100 GHz and above.

The RF electrical signal generator (not shown) may be an external power unit or may be co-integrated electrical drivers from a flip-chip bonded integrated circuit die. In which case, after the electrode via layers 16 are formed, the RF electrical signal may be applied.

Further details of the EO structure 1 which may be used to form an electro-optic modulator, such as the modulator 20 shown in Figure 8, will now be described.

In a preferred example in which the electro-optic layer 2 is formed of TFLN, the structure substrate 4 is formed of silicon and the first insulator layer 3₁ formed thereon is thermal silicon dioxide, SiOz. Advantages of this material combination include the fact that the Si substrate 4 can be removed with relative ease and good selectivity, silicon dioxide as a thermal oxide is of a high quality, and the thickness of the SiOz layer 3₁ is a typical parameter in TFLN wafer fabrication. In other examples, a lithium niobate substrate 4 may be used in place of the Si substrate 4.

However, other combinations of materials may be used for the EO structure 1 in which the electro-optic layer 2 is formed of TFLN. For example, the TFLN layer 2 may be formed on a sapphire, Al₂O₃, substrate. In other examples, the TFLN layer 2 may be formed on a quartz (fused silica) substrate. In these examples, the structure substrate 4 and the first insulator layer 3₁ are formed of the same material, typically thermal silicon dioxide. In such a case, the substrate 4 may be thinned down by a timed process to a thickness that is equal to the specified thickness required for the first insulator layer 3₁. For instance, this can be achieved by a combination of substrate grinding, chemical mechanical polishing, wet etching and dry etching steps. The final thickness of the first insulator layer 3₁ might be monitored via reflectometry or profilometry techniques.

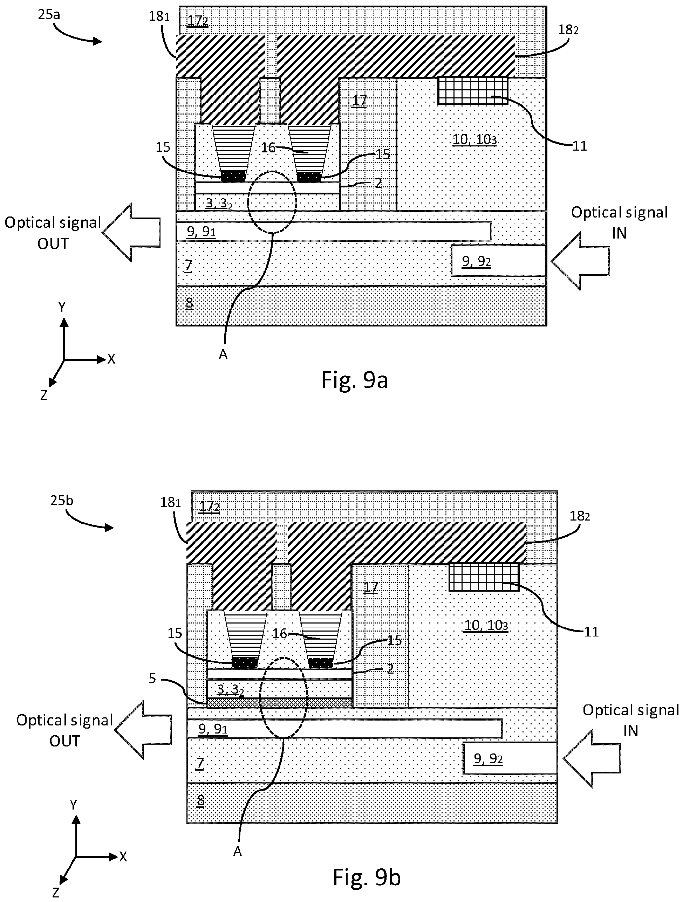

Referring now to Figure 9a, a first integrated phase shifter 25a is shown. The first integrated phase shifter 25a is shown in cross-section view in the x-y plane.

The first integrated phase shifter 25a has been formed by low-temperature die-to-wafer bonding of the second EO structure 1b into a cavity 12 of the third base wafer 6c, which has been further processed according to steps S2.3 to 2.9 hereinbefore described. The first integrated phase shifter 25a may be repeated in different configurations across the third base wafer 6c. In some examples, the first integrated phase shifter 25a is repeated in a plurality of locations across the third base wafer 6c, allowing for the integration of complex modulation schemes based on the integrated phase shifter 25a.

Referring also to Figure 9b, a second integrated phase shifter 25b is shown. As with the first integrated phase shifter 25a, the second integrated phase shifter 25b is shown in cross-section view in the x-y plane.

The second integrated phase shifter 25b is the same as the first integrated phase shifter 25a but is formed using micro-transfer printing as a bonding technique instead of low temperature die-to-wafer bonding. The second integrated phase shifter 25b includes the adhesive layer 5 as an intermediate layer for the bonding.

The second integrated phase shifter 25b may be formed using any suitable electro-optic structure 1. In some examples, the third EO structure 1c is used and, thus, the adhesive layer 5 is present in the EO structure 1 prior to micro-transfer printing. In other examples, the adhesive layer 5 is deposited in the cavity 12 prior to micro-transfer printing (and in which case, the second EO structure 1b is used).

As with the first integrated phase shifter 25a, the second integrated phase shifter 25b may be repeated in different configurations across the third base wafer 6c. In some examples, the second integrated phase shifter 25b is repeated in a plurality of locations across the third base wafer 6c, allowing for the integration of complex modulation schemes based on the second integrated phase shifter 25b.

Both Figures 9a and 9b show the optical mode A (the extent of which is shown by the dashed circle) guided by the hybrid configuration formed by the first waveguide 9₁ and the electro-optic layer 2 for each of the integrated phase shifters 25a, 25b.

Two integrated phase shifters 25 (such as the first and/or second phase shifters 25a, 25b) may be combined in a Mach-Zender interferometer scheme to form an intensity modulator (not shown). In other cases, four integrated phase shifters 25 (such as the first and/or second phase shifters 25a, 25b) may be combined in an Intensity/Quadrature (IQ) topology to form an I/Q modulator (not shown). It should be appreciated that integrated phase shifters 25 may be combined with optimized geometries of optical and electrical sub-elements - such that both electrical and optical signals are optimized to minimize losses and improve electro-optical performance. Furthermore, it should be appreciated that various design configurations using the integrated phase shifters 25, 25a, 25b can be realised, and that the forgoing examples are not limiting.

In yet another example of the method hereinbefore described, steps S2.1 to S2.2 (Figure 3) may be performed to form an electro-optic device for second-harmonic generation. For example, this device may be realised by bonding a poled thin-film lithium niobate film (PPLN) 2 on a high quality insulator layer 3₁ onto the base wafer 6 (for example, any of base wafers 6a, 6b, or 6c). In such a case, steps S2.3 to S2.9 (Figure 6) may be omitted because electrical signals are not required for second harmonic generation function. Keeping the high quality insulator layer 3₁ will lower optical propagation losses for optical signals transmitted and generated via this electro-optic second-harmonic generation device.

In some cases, the PPLN films (as the electro-optic layer 2) for second harmonic generation application can be engineered such that translational alignment is not detrimental to the functionality, thereby allowing to carry out step S2.2 with relaxed translational alignment. For instance, < 10 um translational alignment accuracy is sufficient, while for other cases a < 1um translational alignment accuracy is required. Typical rotational alignment of < 1° between the base wafer 6 and the electro-optic structure 1 is easily achievable by traditional methods of manufacturing.

### Modifications

The method(s) according to the present invention hereinbefore described may be adapted to examples in which a magneto-optic device is formed. In such cases, a magneto-optic structure, which comprises a magneto-optic layer on an insulator layer, is separately formed and then used to form the magneto-optic device.

It will be appreciated that various modifications may be made to the embodiments hereinbefore described. Such modifications may involve equivalent and other features which are already known. Features of one embodiment may be replaced or supplemented by features of another embodiment.

Although claims have been formulated in this application to particular combinations of features, it should be understood that the scope of the disclosure of the present invention also includes any novel features or any novel combination of features disclosed herein either explicitly or implicitly or any generalization thereof, whether or not it relates to the same invention as presently claimed in any claim and whether or not it mitigates any or all of the same technical problems as does the present invention. The applicant hereby gives notice that new claims may be formulated to such features and/or combinations of such features during the prosecution of the present application or of any further application derived therefrom.

## Claims

1. A method of forming a photonic device, the method comprising:
bonding an electro-optic structure onto a base wafer, wherein:
the electro-optic structure comprises a first insulator layer on a structure substrate and an electro-optic layer on the first insulator layer; and
the base wafer comprises a base cladding layer on a base substrate;
the electro-optic structure and the base wafer being bonded such that the electro-optic layer is between the first insulator layer and the base cladding layer.

2. The method according to claim 1, wherein the electro-optic structure further comprises an intermediate layer provided on the electro-optic layer, wherein the intermediate layer is a second insulator layer or an adhesive layer.

3. The method according to claim 1, wherein the electro-optic structure further comprises a second insulator layer on the electro-optic layer and an adhesive layer on the second insulator layer.

4. The method according to any preceding claim, wherein the base wafer further comprises at least one upper base cladding layer provided on the base cladding layer.

5. The method according to claim 4, wherein the base wafer comprises a first upper base cladding layer on the base cladding layer and a second upper base cladding layer on the first upper base cladding layer.

6. The method according to claim 4, wherein the base wafer comprises a third upper base cladding layer partially provided on the base cladding layer so as to define a cavity for bonding to the electro-optic structure.

7. The method according to any preceding claim, wherein:
the base cladding layer comprises at least one waveguide; and
once bonded, the electro-optic layer and the at least one waveguide in combination provide a hybrid structure configured to support an optical mode.

8. The method according to any preceding claim, wherein the electro-optic structure and the base wafer are bonded using wafer-to-wafer bonding, die-to-wafer bonding, or micro-transfer printing.

9. The method according to any preceding claim, wherein the electro-optic layer is formed of any one of the following materials: lithium niobate, LiNbOs, barium titanate, BaTiOs, lithium tantalate, LiTaOs, barium strontium titanate, BaₓSr₁₋ₓTiO₃, potassium niobate, KNbOs, lead zirconate titanate, PbZrₓTi₁₋ₓO₃, magnesium-doped lithium niobate, Mg:LiNbO₃, or poled thin-film lithium niobate, PPLN.

10. The method according to any preceding claim, wherein the first insulator layer is formed of thermal silicon dioxide, SiOz, or alumina, Al₂O₃.

11. The method according to any preceding claim, the method further comprising:
removing the structure substrate.

12. The method according to claim 11, wherein the method further comprises:
patterning the first insulator layer to form a plurality of electrode via holes, each electrode via hole exposing a region of the electro-optic layer;
providing at least one electrode layer in each electrode via hole to form electrode vias.

13. The method according to claim 12, wherein the method further comprises:
providing a top cladding layer on the first insulator layer such that each electrode layer is encapsulated;
patterning the top cladding layer to expose the electrode via holes;
providing a metal routing layer corresponding to the electrode vias, wherein the electrode routing layer and electrode vias in combination form electrodes.

14. An electro-optic phase shifter formed according to the method of claim 13.

15. An electro-optic modulator comprising:
at least two electro-optic phase shifters formed according to the method of claim 13.
